Europäisches Patentamt

European Patent Office

Office européen des brevets

(11) Numéro de publication: **0 274 308 B1**

# FASCICULE DE BREVET EUROPEEN

(45) Date de publication de fascicule du brevet:
**13.11.91**

(51) Int. Cl.⁵: **H04M 15/28**

(21) Numéro de dépôt: **87402763.4**

(22) Date de dépôt: **04.12.87**

(54) **Dispositifs pour délivrer aux abonnés des lignes téléphoniques des informations sur leurs communications.**

(30) Priorité: **09.12.86 FR 8617226**

(43) Date de publication de la demande:
**13.07.88 Bulletin 88/28**

(45) Mention de la délivrance du brevet:
**13.11.91 Bulletin 91/46**

(84) Etats contractants désignés:
**DE GB IT**

(56) Documents cités:
**DE-A- 3 049 049**
**FR-A- 2 414 271**
**US-A- 4 356 509**

(73) Titulaire: **Lewiner, Jacques**
**5, rue Bory d'Arnex**
**F-92210 Saint-Cloud(FR)**

Titulaire: **Taudin, Dominique**
**4, rue Berthollet**
**F-75005 Paris(FR)**

Titulaire: **Carreel, Eric**
**62, rue Brançion**
**F-75015 Paris(FR)**

(72) Inventeur: **Lewiner, Jacques**
**5, rue Bory d'Arnex**
**F-92210 Saint-Cloud(FR)**
Inventeur: **Taudin, Dominique**
**4, rue Berthollet**
**F-75005 Paris(FR)**
Inventeur: **Carreel, Eric**
**62, rue Brançion**
**F-75015 Paris(FR)**

(74) Mandataire: **Behaghel, Pierre et al**
**CABINET PLASSERAUD 84 rue d'Amsterdam**
**F-75009 Paris(FR)**

## Description

L'invention concerne les dispositifs permettant de délivrer aux abonnés --privés ou publics-- des lignes téléphoniques des informations sur les communications et autres services téléphoniques établis sur leurs lignes, à partir des postes correspondant à leurs abonnements.

Chaque communication téléphonique établie à partir d'un poste d'abonné peut déclencher au niveau du central dont dépend ce poste les opérations suivantes :

- le comptage de la durée de la communication, évalué en unités de temps taxables prédéterminées, unités dont les durées peuvent être par exemple égales à 3 minutes ou à 12 secondes,
- l'enregistrement du numéro appelé et de l'instant exact (date et heure) du début de l'appel.

Parmi ces informations, seules celles relatives au "comptage" sont susceptibles de remonter jusqu'au poste de l'abonné par la ligne concernée.

Ce comptage peut se traduire par l'émission d'impulsions de comptage aux termes des unités de temps taxables successives correspondant à la communication.

C'est ainsi que, dans les cabines de téléphone publiques, le nombre, de ces impulsions, compté sur place peut être utilisé pour interrompre la communication lorsqu'il atteint une valeur correspondant à une somme d'argent bien déterminée déboursée par l'usager en vue de ladite communication, ou encore pour décharger proportionnellement une carte de paiement acquise à titre onéreux par l'usager de la cabine et mise en place dans un appareil de contrôle approprié.

Ce type d'exploitation est intéressant, mais il concerne exclusivement les communications téléphoniques en cours.

Il en est de même des dispositifs susceptibles d'être branchés sur les lignes téléphoniques desservant des postes d'abonnés, au-delà des prises générales de branchement de ces postes sur ces lignes, du côté desdits postes, dispositifs agencés de façon à imprimer sur place auxdits postes un certain nombre d'informations relatives à chaque communication établie à partir d'un tel poste, juste à la fin de celle-ci, informations telles que le coût de cette communication et que le numéro de l'abonné appelé.

Un dispositif similaire est par ailleurs déja connu du document DE-A-3049 049, dans lequel les instructions relatives aux numéros appelés ne sont pas prélevées sur la ligne téléphonique, mais dans des mémoires associées au poste de l'abonné dans lesquelles ces informations ont été préalablement enregistrées.

Il a également été proposé de monter aux postes téléphoniques des abonnés des totalisateurs permettant à ces derniers de connaître le montant total des taxes dues au titre des communications établies à partir de ces postes à compter d'une date donnée.

Ces appareils peuvent rendre certains services, mais l'information qu'ils procurent est seulement globale.

Or il existe de nombreux cas pour lesquels les abonnés seraient désireux de disposer très rapidement d'informations plus précises en ce qui concerne les différentes communications établies sur leur ligne pendant une période de temps donnée qui peut aussi bien s'étendre sur une durée relativement courte, de l'ordre par exemple de l'heure ou de la demi-journée, que sur une période d'abonnement normale de l'ordre de un, deux, trois mois ou même davantage.

De telles informations sont par exemple les numéros appelés, les moments et les coûts individuels correspondant à ces différentes communications.

Certes ces informations peuvent être transmises aux abonnés par l'Administration des Postes sous la forme de relevés mensuels trimestriels ou autres.

L'invention a pour but, surtout, de rendre possible une prise de connaissance immédiate et sur place desdites informations.

A cet effet, les dispositifs de délivrance d'informations selon l'invention sont caractérisés en ce qu'ils comprennent encore, branchés sur la ligne téléphonique à contrôler, au-dela de la prise générale de branchement du poste sur cette ligne et du côté dudit poste, des moyens pour détecter le numéro appelé et le coût de chaque communication établie sur cette ligne à partir de ce poste, des moyens pour afficher sur place ces deux données et, en outre, également localisés du côté du poste de l'abonné, des moyens pour enregistrer de façon durable les numéros appelés ainsi détectés correspondant aux communications demandées successivement au cours d'une période prédéterminée T, des moyens pour enregistrer de façon durable les coûts successifs de ces communications, et des moyens propres à afficher sur un écran vidéo approprié la suite de ces numéros, avec les coûts des communications correspondantes, en réponse à des commandes très simples telles que les appuis de touches d'un clavier.

Dans des modes de réalisation préférés, on a recours en outre à l'une et/ou à l'autre des dispositions suivantes :

- les moyens d'affichage sont constitués par un terminal télématique du type de ceux connus sous la désignation commerciale "Minitel",

- le dispositif comprend en outre des moyens d'horloge pour indiquer les instants des débuts et/ou fins des communications successives, instants définis par la date, l'heure et éventuellement la minute concernées, des moyens pour enregistrer ces indications de façon durable et des moyens pour afficher celles-ci en même temps que les numéros appelés correspondants,
- les moyens d'enregistrement durable sont constitués par des mémoires reprogrammables électriquement,
- les moyens d'enregistrement durable sont constitués par des mémoires vives à alimentation sauvegardée,
- le dispositif comprend en outre des moyens pour délivrer les données qui y sont enregistrées sur la ligne téléphonique en réponse à un appel codé prédéterminé,
- le dispositif comprend des moyens de sécurité permettant de réserver exclusivement à des personnes habilitées l'accès aux données qui y sont enregistrées, aux fins d'affichage de ces données, ces moyens mettant en oeuvre en particulier la composition d'un mot de passe.

L'invention comprend, mises à part ces dispositions principales, certaines autres dispositions qui s'utilisent de préférence en même temps et dont il sera plus explicitement question ci-après.

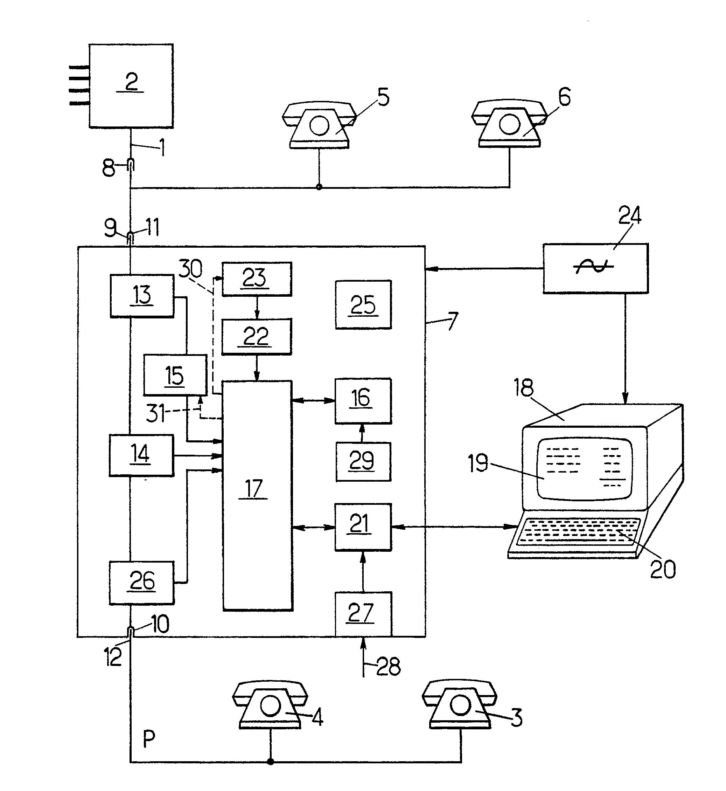

Dans ce qui suit, l'on va décrire un mode de réalisation préféré de l'invention en se référant au dessin ci-annexé d'une manière bien entendu non limitative.

La figure unique de ce dessin montre schématiquement un dispositif de délivrance d'informations établi conformément à l'invention.

Les informations en question concernent la totalité des communications téléphoniques établies successivement au cours d'une période prédéterminée T sur une ligne 1 reliant à un central 2 un poste d'abonné P schématisé par un ensemble d'appareils combinés émetteurs-récepteurs 3 à 6.

Ce poste P peut être public ou privé et peut comprendre un seul appareil combiné ou plusieurs tels appareils, tous raccordés à la ligne 1 au niveau d'une borne générale d'arrivée et de départ 8.

Le dispositif de délivrance d'informations selon l'invention, schématisé par le rectangle 7 sur le dessin, est également branché sur la ligne 1, au-delà de la borne générale 8 d'arrivée de cette ligne 1 au poste P de l'abonné, du côté de ce poste, ce branchement étant réalisé à l'aide de respectivement deux prises téléphoniques mâle 9 et femelle 10 coopérant avec deux prises complémentaires 11 et 12 du circuit téléphonique.

Dans le mode de réalisation illustré, les combinés 3 et 4, montés en parallèle l'un sur l'autre, sont tous deux reliés à la borne générale 8 à travers le dispositif 7 alors que les deux combinés 5 et 6, également montés en parallèle l'un sur l'autre, sont directement reliés à la borne générale 8 et donc montés en parallèle sur le dispositif 7.

Ce dispositif 7 comprend, montés en série entre les deux prises 9 et 10 :

- un circuit 13 propre à détecter les unités taxables afférentes aux différentes communications téléphoniques établies à partir de l'un quelconque des appareils 3 à 6 du poste P,
- et un circuit 14 propre à détecter les numéros de téléphone appelés A pour ces différentes communications.

Le circuit 13 est agencé de façon à compter les nombres N des impulsions périodiques de taxation qui sont envoyées sur la ligne 1 au cours de chaque communication, à partir du central 2.

Ce circuit 13 est avantageusement associé à un circuit 15 permettant de multiplier les nombres N ainsi comptés par des nombres U correspondant aux prix ou taxes unitaires aux instants réels des communications, de façon à élaborer des produits NU correspondant aux coûts réels de ces communications.

Des moyens sont prévus pour modifier les nombres U de façon à tenir compte de l'évolution des taxes dans le temps.

Les données ainsi détectées N, ainsi qu'éventuellement les produits NU s'ils sont effectués, sont envoyés dans un ensemble d'enregistrement et d'exploitation comprenant notamment une mémoire non volatile 16 et un microprocesseur 17.

Les circuits correspondant au microprocesseur 17 sont connus en eux-mêmes, par exemple par le brevet France n° 2 427 016, de sorte qu'ils ne seront pas davantage détaillés ici.

La mémoire 16 est choisie d'un type, récemment apparu sur le marché, tel que d'une part elle conserve durablement les données qui y sont enregistrées, même après chaque coupure de son alimentation électrique, et que d'autre part elle puisse être reprogrammée électriquement.

Le circuit 14, quant à lui, peut être constitué d'une façon connue en soi exploitant le principe de numérotation par train d'impulsions ou encore le principe de numérotation par fréquences vocales.

Comme pour les signaux élaborés par le circuit 13 et éventuellement par le circuit 15, ceux A élaborés par le circuit 14 sont envoyés dans l'ensemble 16-17 d'enregistrement et de calcul.

En outre --et c'est là l'un des aspects originaux de la présente invention-- on prévoit un appareil d'affichage vidéo 18 associé au dispositif 7 et permettant de faire apparaître instantanément sur son écran 19, par simple appui sur les touches d'un clavier 20, les contenus de la mémoire 16, ou plus précisément les numéros d'appel des différentes communications établies au cours de la période T ainsi que leurs montants.

On fait comprendre en outre au dispositif 7 un circuit d'interface 21 permettant d'adapter le microprocesseur 17 à l'appareil d'affichage 18 de façon telle que l'abonné de la ligne 1 puisse faire apparaître très simplement sur son écran 19 les différents contenus de la mémoire 16 en enfonçant certaines touches du clavier 20 selon un programme ou "menu" affiché sur l'écran lui-même.

L'ensemble 18-20 est avantageusement un terminal télématique du type de ceux connus sous la désignation commerciale "Minitel".

Selon des modes de réalisation intéressants, mais non indispensables, on peut prévoir d'afficher sur l'écran 19, en plus des informations explicitées ci-dessus, certaines autres informations relatives encore aux communications téléphoniques établies à partir du poste P considéré, et en particulier les instants des débuts de ces différentes communications, instants définis par le jour, l'heure et éventuellement la minute.

A cet effet, une horloge 22 est associée au microprocesseur 17 et à la mémoire 16 de façon à enregistrer dans cette dernière les informations permettant d'identifier lesdits instants.

Dans ce cas, un organe 23 de mise à jour et de mise à l'heure est également prévu pour maintenir l'exactitude des indications délivrées par l'horloge 22.

Les moyens de mise à jour ci-dessus mentionnés de l'horloge en 23 et du taux des taxes en 15 sont avantageusement actionnables à partir du clavier 20, par l'intermédiaire des circuits 21 et 17 et des connexions respectivement symbolisées par les flèches en tirets 30 et 31.

On voit encore sur le dessin :
- en 24, une source d'énergie électrique extérieure qui peut être le réseau et qui permet d'alimenter électriquement aussi bien le dispositif 7 que l'appareil 18,
- en 25, un circuit de sauvegarde permettant d'éviter les effacements involontaires des contenus de la mémoire 16 ou tout au moins de porter remède à de tels effacements,
- en 26, un détecteur de "sonnerie", c'est-à-dire plus précisément un circuit propre à détecter un appel codé provenant par la ligne 1 d'un autre poste en vue de la consultation à distance des contenus de la mémoire 16, les appels codés ainsi détectés étant propres à déclencher en réponse l'envoi desdits contenus sur ladite ligne en vue de leur affichage audit autre poste,
- en 27, un circuit de sécurité permettant de réserver la consultation locale du dispositif 7 à des personnes spécialement habilitées à cet effet, l'interface 21 n'étant apte alors à coupler le dispositif 7 à l'appareil 19 qu'après réception et identification par ledit circuit 27 d'un "mot de passe" ou autre signal codé approprié symbolisé par la flèche 28,
- et en 29, des moyens permettant de remettre volontairement à zéro la mémoire 16 en effaçant son contenu.

On peut encore prévoir :
- des moyens pour totaliser les nombres N d'unités taxables et/ou les coûts NU relatifs aux différentes communications affichées sur l'écran 19 au cours d'une période prédéterminée T,
- des moyens pour régler la valeur T de cette période ainsi que l'instant de son début de façon notamment à la limiter à une fraction seulement de celle correspondant à une période d'abonnement séparant les mises à zéro volontaires successives de la mémoire 16,
- et/ou des moyens pour afficher en temps réel sur l'écran 19 les données relatives à une communication téléphonique en cours, et faisant apparaître en particulier son coût progressivement croissant.

L'ensemble des circuits constitutifs du dispositif 7, c'est-à-dire désignés ci-dessus par les références 13 à 16, 21 à 23 et 25 à 31, sont avantageusement contenus dans un boîtier de petites dimensions équipé des deux prises 9 et 10 et donc facile à brancher sur la prise générale 8 ou sur une prise auxiliaire telle que 11.

Le boîtier en question se présente par exemple sous la forme d'un parallélépipède rectangle dont l'épaisseur est de l'ordre de 3 à 5 cm et dont la base, carrée, présente des côtés de l'ordre de 10 cm.

En suite de quoi, et quel que soit le mode de réalisation adopté, on obtient finalement un dispositif de délivrance d'informations téléphoniques dont la constitution, le fonctionnement et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Dispositif pour délivrer à l'abonné d'une ligne téléphonique (1) des informations sur les communications et autres services téléphoniques demandés sur sa ligne à partir du poste correspondant (P), caractérisé en ce qu'il comprend, d'une part, branchés sur ladite ligne, au-delà de la prise générale de branchement (8) du poste sur cette ligne et du côté dudit poste, des moyens (13,14) pour détecter le coût de chaque communication et le numéro appelé et, d'autre part, également localisés du côté du poste de l'abonné, des moyens (16) pour enregistrer de façon durable les numéros appelés ainsi détectés correspondant aux communications demandées successivement au cours d'une période prédéterminée T et pour enregistrer de façon durable les coûts successifs de ces communications et des moyens (17, 18,21) propres à afficher sur un écran vidéo approprié (19) la suite de ces numéros, avec les coûts des communications correspondantes, en réponse à des commandes très simples telles que les appuis de touches d'un clavier (20).

2. Dispositif selon la revendication 1, caractérisé en ce que les moyens d'affichage (18-20) sont constitués par un terminal télématique du type de ceux connus sous la désignation commerciale "Minitel".

3. Dispositif selon l'une quelconque des revendications 1 et 2, caractérisé en ce qu'il comprend en outre des moyens d'horloge (22) pour indiquer les instants des débuts et/ou fins des communications successives, instants définis par la date, l'heure et éventuellement la minute concernées, des moyens (16) pour enregistrer ces indications de façon durable et des moyens pour afficher celles-ci en même temps que les numéros appelés correspondants.

4. Dispositif selon l'une quelconque des précédentes revendications, caractérisé en ce que les moyens d'enregistrement durable sont constitués par des mémoires (16) reprogrammables électriquement.

5. Dispositif selon l'une quelconque des revendications 1 à 3, caractérisé en ce que les moyens d'enregistrement durable sont constitués par des mémoires vives à alimentation sauvegardée.

6. Dispositif selon l'une quelconque des précédentes revendications, caractérisé en ce qu'il comprend en outre des moyens (26) pour délivrer les données qui y sont enregistrées sur la ligne téléphonique en réponse à un appel codé prédéterminé.

7. Dispositif selon l'une quelconque des précédentes revendications, caractérisé en ce qu'il comprend en outre des moyens de sécurité (27) permettant de réserver exclusivement à des personnes habilitées l'accès aux données qui y sont enregistrées, aux fins d'affichage de ces données, ces moyens mettant en oeuvre en particulier la composition d'un mot de passe (28).

8. Dispositif selon l'une quelconque des précédentes revendications, caractérisé en ce qu'il comprend en outre des moyens pour régler à volonté la valeur T de la période prédéterminée ainsi que l'instant de son début.

## Claims

1. Device for providing the subscriber of a telephone line (1) with information on the calls and other telephone services demanded on his line from the corresponding station (P), characterized in that it comprises, on the one hand, connected to said line, beyond the general connection socket (8) of the station to this line and on the side of said station, means (13,14) for detecting the cost of each call and the number called and, on the other hand, also located on the side of the station of the subscriber, means (16) for recording durably the numbers called thus detected corresponding to the calls demanded successively in the course of a predetermined period T and for recording durably the successive costs of these calls, and means (17,18,21) adapted to display on a suitable video screen (19) the sequence of these numbers, with the costs of the corresponding calls, in response to very simple requests such as pressing the keys of a keyboard (20).

2. Device according to claim 1, characterized in that the display means (18-20) are constituted by a telematic terminal of the type known under the trade name "Minitel".

3. Device according to any one of the claims 1 and 2, characterized in that it comprises in addition clock means (22) to indicate the moments of the starts and/or ends of the successive calls, said moments being defined by the date, the hour and possibly the minute concerned, means (16) for recording these indications durably and means for displaying the latter at the same time as the corresponding numbers called.

4. Device according to any one of the preceding claims, characterized in that the durable recording means are constituted by electrically reprogrammable memories (16).

5. Device according to any one of the claims 1 to 3, characterized in that the durable recording means are constituted by life memories with a protected supply.

6. Device according to any one of the preceding claims, characterized in that it comprises in addition means (26) for delivering the data which are recorded therein to the telephone line in response to a predetermined coded call.

7. Device according to any one of the preceding claims, characterized in that it comprises in addition safety means (27) enabling the exclusive reservation to persons authorized of access to the data recorded therein, for the purpose of displaying these data, these means employing in particular the composition of a pass word (28).

8. Device according to any one of the preceding claims, characterized in that it comprises in addition means for adjusting at will the value T of the predetermined period as well as the moment of its commencement.

**Patentansprüche**

1. Einrichtung zum Beliefern eines Fernsprechteilnehmers (1) mit Informationen über Gespräche und andere Telefondienste, die über seine Leitung von dem entsprechenden Anschluß (P) angefordert werden, dadurch gekennzeichnet, daß sie einerseits Einrichtungen (13, 14) zur Ermittlung der Kosten jedes Gespräches und der angerufenen Nummer, die an die Leitung hinter dem Haupteingang (8) des Leitungsanschlusses und auf der Seite des Telefonanschlusses angeschlossen sind und andererseits ebenfalls auf der Seite des Anschlusses des Teilnehmers angeordnete Einrichtungen (16) zum dauerhaften Registrieren der angerufenen, auf diese Weise ermittelten Nummern, die den im Laufe eines vorbestimmten Zeitraumes (T) nacheinander angeforderten Gesprächen entsprechen und zum ebenfalls dauerhaften Registrieren der nacheinander anfallenden Kosten dieser Gespräche enthält und daß Einrichtungen (17, 18, 21) vorgesehen sind, mit denen die Folge dieser Nummern mit den Kosten der entsprechenden Gespräche als Antwort auf sehr einfache Betätigungen, wie z. B. das Drücken von Tasten einer Tastatur (20) auf einem geeigneten Videobildschirm anzeigbar sind.

2. Vorrichtung nach Anspruch 1, dadurch gekennzeichnet, daß die Anzeigeeinrichtungen (18-20) aus einem telematischen Terminal des unter der Bezeichnung "Minitel" im Handel befindlichen Typs bestehen.

3. Vorrichtung nach einem der Ansprüche 1 und 2, dadurch gekennzeichnet, daß sie ferner eine Zeitanzeige (22) zum Anzeigen des Beginns und/oder des Endes der aufeinanderfolgenden Gespräche, die das betreffende Datum, die Stunde und gegebenenfalls die Minute umfaßt, Einrichtungen (16) zum dauerhaften Registrieren dieser Anzeigen und Mittel enthält, mit denen diese zur gleichen Zeit wie die entsprechenden angerufenen Nummern sichtbar gemacht werden.

4. Einrichtung nach einem der vorhergehenden Ansprüche, dadurch gekennzeichnet, daß die Einrichtungen zum dauerhaften Registrieren aus elektrisch umprogrammierbaren Speichern (16) bestehen.

5. Einrichtung nach einem der vorhergehenden Ansprüche 1 bis 3, dadurch gekennzeichnet, daß die Einrichtungen zum dauerhaften Registrieren aus Schnellspeichern mit geschützter Einspeisung bestehen.

6. Einrichtung nach einem der vorhergehenden Ansprüche, dadurch gekennzeichnet, daß sie ferner Mittel (26) enthält, mit denen die darin registrierten Daten an die Telefonleitung als Antwort auf einen vorgegebenen kodierten Anruf geliefert werden.

7. Einrichtung nach einem der vorhergehenden Ansprüche, dadurch gekennzeichnet, daß sie Sicherheitseinrichtungen (27) enthält, die es erlauben, den Zugang zu den darin registrierten Daten zum Zweck ihrer Anzeige ausschließlich für befugte Personen zu reservieren, wobei die Einrichtungen insbesondere von dem Wählen eines Kennwortes (28) Gebrauch machen.

8. Vorrichtung nach einem der vorhergehenden Ansprüche, dadurch gekennzeichnet, daß sie ferner Mittel enthält, mit denen der Wert (T) des vorbestimmten Zeitabschnittes, sowie der Zeitpunkt seines Beginns nach Belieben einstellbar ist.